# EUROPEAN PATENT SPECIFICATION

(11) **EP 1 489 477 B1**
(45) Date of publication and mention of the grant of the patent: **28.01.2009**
(21) Application number: 03712782.6
(22) Date of filing: 20.03.2003
(51) Int. Cl.: G05D 7/06

(54) **MASS FLOW CONTROLLER**
MASSENFLUSSSTEUERUNG
REGULATEUR DE DEBIT MASSIQUE

(30) Priority: 25.03.2002 JP 2002082297
(43) Date of publication of application: 22.12.2004
(73) Proprietor: STEC INC., Kyoto-shi, Kyoto 601-8510 (JP)
(72) Inventor: NISHIKAWA, Masami, c/o Stec Inc., Kyoto-shi, Kyoto 601-8116 (JP); YAMAGUCHI, Masao, c/o Stec Inc., Kyoto-shi, Kyoto 601-8116 (JP)
(74) Representative: Hoffmann, Jörg Peter
(86) International application number: PCT/JP2003/003387
(87) International publication number: WO 2003/081361

(56) References cited:
- JP-A- 3 031 913
- JP-A- 6 035 543
- JP-A- 10 055 218
- JP-A- 53 129 788
- US-A- 5 062 446
- US-A- 5 762 086

## Description

### TECHNICAL FIELD

The present invention relates to a mass flow controller. More particularly it relates to a mass flow controller free from pressure effects.

### BACKGROUND ART

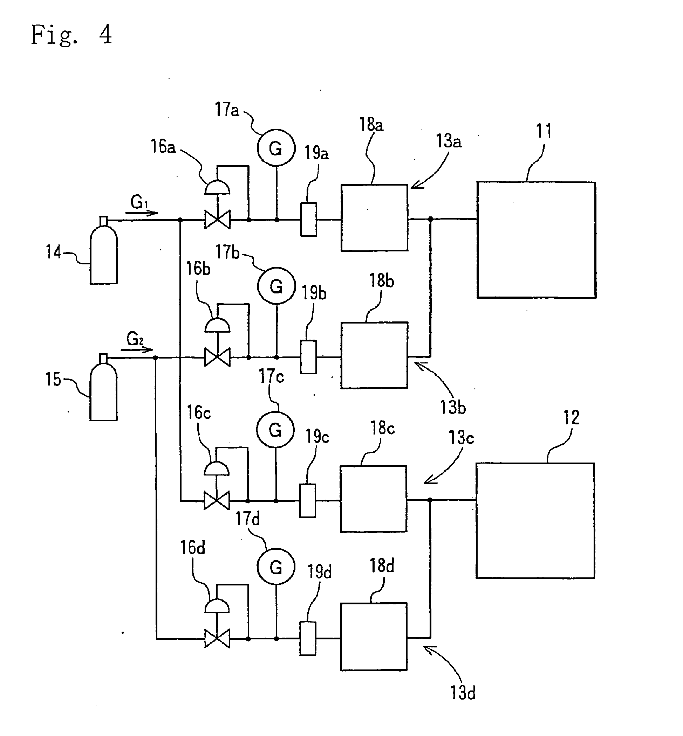

Fig. 4 is a diagram shoring an example of semiconductor manufacturing line using a conventional mass flow controller. In Fig. 4, reference numerals 11, 12 are chambers composing two systems of semiconductor manufacturing line, 13a to 13d are gas feed lines for feeding different gases G₁, G₂ into chambers 11, 12, and 14, 15 are gas cylinders for feeding gases G₁, G₂, respectively.

The gas feed lines 13a to 13d are composed of mechanical pressure regulators 16a to 16d, gauges 17a to 17d at the downstream side of the pressure regulators 16a to 16d, and mass flow controllers 18a to 18d. Reference numerals 19a to 19d are filters. The gas feed lines 13a, 13c supply gas G₁ into the chambers 11, 12, and the gas feed lines 13b, 13d supply gas G₂ into the chambers 11, 12. That is, plural gases G₁, G₂ are supplied into plural lines 13a to 13d.

The pressure of the gases G₁, G₂ supplied from the cylinders 14, 1 5 is usually reduced to about 98 kPa at the outlet side, and by further reducing to about 30 kPa, for example, by the pressure regulators 16a to 16d, the gases are supplied into the mass flow controllers 18a to 18d, so that damage of mass flow controllers 18a to 18d may be prevented. The manager of semiconductor manufacturing line controls the mass flow controllers 18a to 18d so as to supply gases G₁, G₂ at specified flow rat e in the chambers 11, 12, and adjusts the pressure regulators 16a to 16d while observing the gauges 17a to 17d, and therefore adjusts properly the pressure of gases G₁, G₂ to be supplied into the mass flow controllers 18a to 18d.

As shown in Fig. 4, by combining the mass flow controllers 18a to 18d with pressure regulators 16a to 16d, stable control is realized if pressure fluctuates slightly at the supply side of gases G₁, G₂.

However, in the conventional combination of mass flow controllers 18a to 18d with the pressure regulators 16a to 16d, the plural members 16a to 16d, 17a to 17d, 18a to 18d, and 19a to 19d must be linked and coupled, it takes much time and cost in installation of gas feed lines 13a to 13d. Besides, the greater the number of pipings for connecting the members 16a to 16d, 17a to 17d, 18a to 18d, and 19a to 19d, the higher becomes the risk of gas leak and other problems at junctions, and the resistance caused by piping may bring about limits in flow rate or unstable elements.

Only by flow control by combination of the mass flow controllers 18a to 18d with the pressure regulators 16a to 16d, it was not always possible to control the flow rate stably, in case of substantial changes in flow rate, due to fluctuations of inlet side pressure and outlet side pressure of the flow rate control device in the mass flow controllers 18a to 18d.

That is, while the flow rate is somewhat stable, the mechanical pressure regulators 16a to 16d can adjust the pressure appropriately, but it may not be possible to follow when flow rate changes suddenly, and pressure fluctuations at the inlet side caused by sudden control of flow rate by the mass flow controllers 18a to 18d may cause instability in control of flow rate by the mass flow controllers 18a to 18d.

Besides, sudden changes in gas flow rate supplied by the gas feed line 13a may cause effects on the pressure at the upstream side of the pressure regulator 16a, and it may also lead to disturbance in the flow rate of the gas supplied by other gas feed line 13c branched off from this.

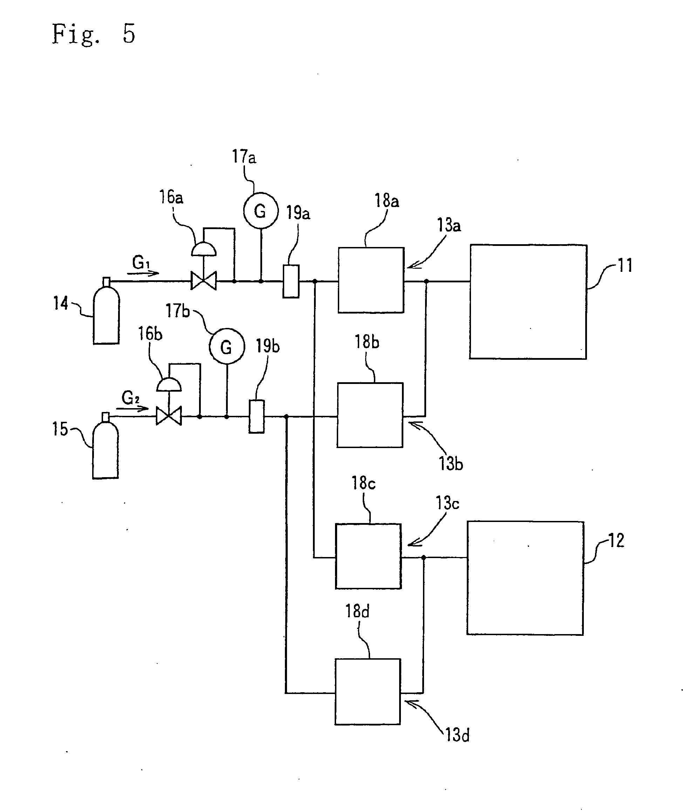

Further, as shown in Fig. 5, in order to reduce the cost, a plurality of mass flow controllers 18a to 18d may be controlled by branching and connecting pipes from the pressure regulators 16a, 16b, but in such a case, however, effects of pressure fluctuations becomes greater.

Known mass controller being used within an apparatus for delivering process gas for making semiconductors are disclosed in US-A-5 762 086 and US-A-5 062 446.

The invention is devised in the light of the above problems, and it is hence an object thereof to present a mass flow controller capable of controlling always stably at setting flow rate in spite of pressure fluctuations at either upstream side or downstream side of the mass flow controller.

### DISCLOSURE OF THE INVENTION

The object is achieved by a mass flow controller, comprising: a passage block having a fluid passage consisting of first to third passages 2a to 2c; a flow rate sensor, a pressure control valve and a flow rate control valve, whereby said pressure control valve is disposed at the upstream side of said flow control valve; a pressure sensor disposed between the pressure control valve and the flow rate control valve; a controller for feeding back a pressure signal from the pressure sensor and issuing a pressure control signal Cp and for feeding back a flow rate signal from the flow rate sensor and issuing a flow rate control signal Cf, whereby both said pressure control valve and said flow control valve comprise a diaphragm and an actuator, said diaphragm abutting against said actuator and a valve seat, which is formed at one side of the passage block, whereby an opening degree for linking and coupling said passage 2a provided at the upstream side of the pressure control valve to said passage 2b provided at the downstream side of the pressure control valve is controlled by said pressure control signal Cp, and whereby an opening degree for linking and coupling said passage 2b provided at the upstream side of the flow control valve to said passage 2c provided at the downstream side of the flow control valve is controlled by said flow rate control signal Cf.

Therefore, by using this mass flow controller, if pressure fluctuations occur at its upstream side, such effects can be securely eliminated by the pressure control valve controlled by feedback with the output of the pressure sensor, and pressure fluctuations occurring at the downstream side of the mass flow controller can be securely eliminated by the flow rate control valve controlled by feedback with the output of the flow rate sensor.

That is, if pressure fluctuation occurs whether at the upstream side or at the downstream side of the mass flow controller, the flow rate can be always controlled stably. In other words, since the mass flow controller itself has a pressure adjusting function, and the inlet side pressure of the flow rate control valve can be always kept constant, and its performance can be opened up to the maximum extent. Hence, the flow rate accuracy and stability may be enhanced.

In order to supply gas at stable flow rate, conventional mechanical pressure regulators are not needed, and the structure of gas feed line can be simplified, and the cost for construction of gas feed line can be saved. In addition, it is not necessary to link and couple plural members, and it eliminates risk of gas leak due to formation of unnecessary piping passages and connections, or reduction of pressure due to passage resistance.

When the pressure sensor is disposed at a position adjacent the flow rate sensor, such that the pressure sensor faces to the passage immediately before the flow rate sensor, the pressure sensor faces to the passage required in the mass flow controller, and the mass flow controller can be formed in a compact design, and since the pressure sensor is provided in the passage immediately before the flow rate sensor, a stable flow rate control is realized by feedback control using this flow rate sensor.

### BRIEF DESCRIPTION OF THE DRAWINGS

Fig. 1 is a block diagram showing an example of mass flow controller of the invention.
Fig. 2 is a diagram showing an example of measurement of flow rate control by using the mass flow controller.
Fig. 3 is a diagram showing an example of semiconductor manufacturing line using the mass flow controller.
Fig. 4 is a diagram showing an example of semiconductor manufacturing line using a conventional mass flow controller.
Fig. 5 is a diagram showing other example of semiconductor manufacturing line using the conventional mass flow controller.

### BEST MODE FOR CARRYING OUT THE INVENTION

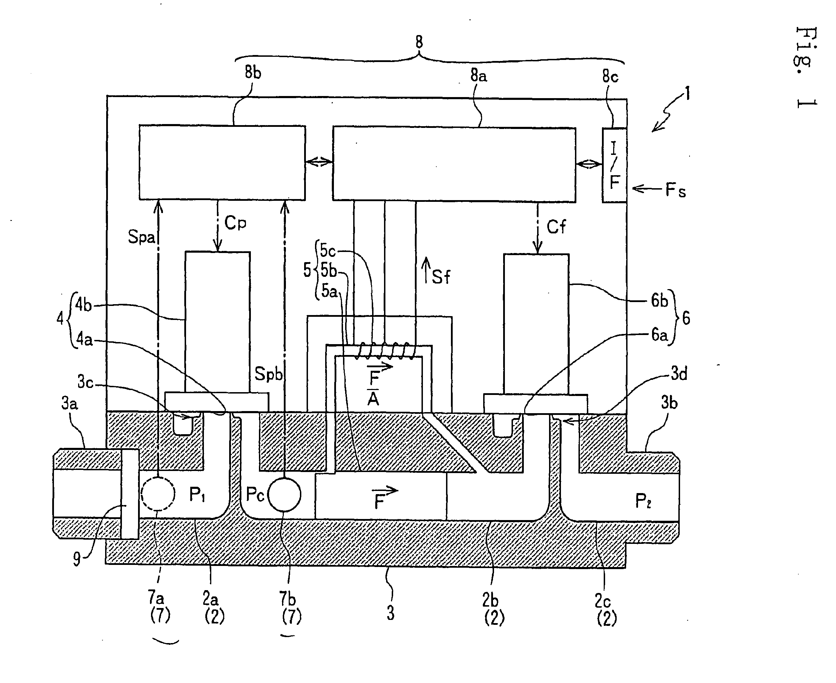

Fig. 1 is a block diagram showing an example of mass flow controller 1 of the invention. This mass flow controller 1 comprises a passage block 3 for forming a passage 2 for passing a fluid (in this example, the fluid is a gas, but the fluid is not limited to gas alone), a pressure control valve 4 coupled to this passage block 3, a flow rate sensor 5, a flow rate control valve 6, two pressure sensors 7, a controller 8 for controlling the members 4 to 6, and a filter 9.

The passage 2 is formed to circulate through the passage block 3, consisting of first to third passages 2a to 2c. Piping joints 3a, 3b are provided at the upstream end of the first passage 2a and downstream end of the third passage 2c, respectively. The passage 2 may be formed by drilling, casting or other method, and if the second passage 2b is formed by drilling, the passage block 3 must be separated at least at one position, but anyway by forming the passage blocks 3, 3a, 3b integrally on the whole, gas leak can be prevented.

The pressure control valve 4 is composed of a diaphragm 4a abutting against a valve seat 3c formed, for example, at one side of the passage block 3, and its actuator 4b, and the opening degree for linking and coupling the passages 2a, 2b is controlled by a control signal Cp.

The flow rate sensor 5 is composed of a straightening element 5a inserted, for example, in the second passage 2b, a branch passage 5b for branching a specified flow rate 1/A from the second passage 2b, and a sensor main body 5c provided in this branch passage 5b, and issues a passage signal Sf showing the total flow rate F.

The flow rate control valve 6 is composed of a diaphragm 6a abutting against a valve seat 3d formed, for example, at one side of the passage block 3, and its actuator 6b, and the opening degree for linking and coupling the passages 2b, 2c is controlled by a control signal Cf.

The pressure control valve 4, flow rate sensor 5, and flow rate control valve 6 are aligned at one side (upper side) of the passage block 3, and hence the overall size of the mass flow controller is suppressed.

The pressure sensor 7 is composed of a first sensor 7a disposed at a side of the passage block 3 so as to face to the first passage 2a, and a second sensor 7b disposed at a side of the passage block 3 so as to face to the second passage 2b, and the both pressure sensors 7a, 7b are buried in the passage block 3 in the different side of the side of mounting the members 4 and 5 (in this embodiment, in Fig. 1, before the first passage 2a and inside of the second passage positioned immediately before the straightening element 5a composing the flow rate sensor 5). Hence, the pressure sensor 7 can be installed without increasing the overall size of the mass flow controller 1. The sensors 7a, 7b issue pressure signals Spa, Spb showing pressures P₁, Pc in the first passage 2a and second passage 2b, respectively.

In this embodiment, the sensors 7a, 7b are provided at the side of the passage block 3, but the mounting side is not particularly specified as far as the pressure sensor 7 faces to the passage 2. That is, they may be buried in the lower side of the passage block 3, or in the upper side, at any position not disturbing the control valve 4, flow rate sensor 5, or flow rate control valve 6.

The controller 8 consists of a control unit 8b for feeding back pressure signals Spa, Spb (outputs) from the pressure sensor 7, issuing a pressure control signal Cp, and controlling the pressure control valve 4 by feedback, a control unit 8a for feeding back flow rate signal Sf from the flow rate sensor 5, issuing a flow rate control signal Cf, and controlling the flow rate control valve 6 by feedback, and an interface 8c with outside.

The control unit 8a controls the flow rate control valve 6 by feedback according to a signal from outside, and also issues a control signal to the control unit 8b to control the pressure Pc immediately before the straightening element 5a at a specified pressure.

Although not shown in the drawing, the controller 8 has a display unit for showing set values of flow rate F or provisional pressure Pc, or values P₁, Pc, F measured by sensors 5, 7a, 7b. The values Pc, Pc, F measured by sensors 5, 7a, 7b can be issued outside through the interface 8c. The interface 8c may be either digital communication means or analog input and output means.

In this embodiment, in order to clarify the control relation, the control units 8a, 8b are shown separately, but the invention is not limited to this structure, and the entire mechanism may be supervised and controlled by one controller 8 and the manufacturing cost may be lowered.

In addition, control of pressure control valve 4 by the control unit 8b is not limited to feedback control by using only the output signal Spb from the pressure sensor 7b, and it may be controlled by using output signal Spa from the pressure sensor 7a. By using the pressure sensor 7a as in this example, the pressure of the gas supplied in the mass flow controller 1 can be monitored, but this pressure sensor 7a may be also omitted.

In the mass flow controller 1 of the invention, the control unit 8b controls the pressure control valve 4 by feedback to a specified pressure Pc by using the pressure signal Spb from the pressure sensor 7b, and therefore if the inlet side pressure P₁ of the mass flow controller 1 fluctuates due to some effects, the mass flow controller 1 can control stably. Besides, since the control unit 8a controls the flow rate control valve 6 by feedback so that the measured flow rate F may conform to the preset flow rate Fs by using the flow rate signal Sf from the flow rate sensor 5, and therefore if the outlet side pressure P₂ of the mass flow controller 1 fluctuates, it is free from its effects.

Therefore, unlike the prior art, the mass flow controller 1 of the invention does not require pressure regulators 16a to 16d in its up-stream. Since the mass flow controller 1 of the embodiment also incorporates the filter 9, it is not required to link and couple filters 19a to 19d separately as needed in the prior art. As a result, the gas feed line is simplified, and the mounting footprint is saved. In this embodiment, the filter 9 is disposed at the utmost upstream side of the passage 2, but the invention is not intended to specify the position of the filter 9. As the case may be, the filter 9 may be omitted.

In particular, in the embodiment, the pressure sensor 7b faces to the passage 2b immediately before the flow rate sensor 5 in the integrated passage block 3, and the predetermined pressure Pc can be kept by using the pressure signal Spb of the pressure sensor 7b; therefore, the flow rate F in a state that the pressure Pc is constant can be measured correctly by the flow rate sensor 5.

Also, in the embodiment, the pressure control valve 4 and flow rate sensor 5 are arranged side by side, and the second passage 2b disposed between them is designed as short as possible, and hence the time delay of pressure Pc with respect to the output of the opening degree control signal Cp of the pressure control valve 4 is minimized, and fluctuations of pressure Pc in the section of the flow rate sensor 5 are made as small as possible.

Further, in the second passage 2b between the pressure control valve 4 and flow rate sensor 5, the pressure sensor 7b is disposed at a position as close to the flow rate sensor 5 as possible (the passage composed immediately before), so that a pressure Pc having less effects of disturbance or the like can be measured. As a result, the control accuracy and stability of flow rate by the mass flow controller 1 can be enhanced.

In addition, by eliminating fitting and piping from the second passage 2b between the pressure control valve 4 and flow rate sensor 5, it is free from risk of pressure drop due to passage resistance or gas leak.

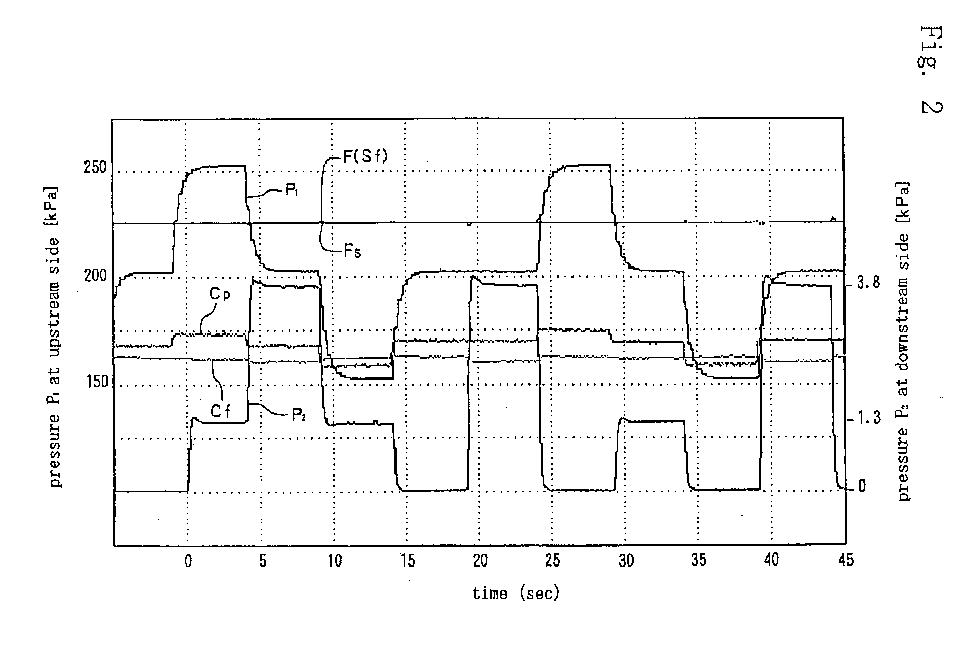

Fig. 2 is an example of measurement of pressure P₁ at upstream side of mass flow controller 1, flow rate set value Fs, flow rate F determined from output signal Sf of flow rate sensor 5, and control signals Cp, Cf when pressure P₂ is varied at downstream side.

In Fig. 2, the axis of abscissas denotes the time (seconds), and pressures P₁, P₂ are varied at random in every about 5 seconds, and in this example, for example, the upstream side pressure P₁ is changed suddenly in a range of 200 ± 50 kPa, and the downstream side pressure P₂ is changed suddenly in a range of 0 to 3.8 kPa.

As shown in Fig. 2, the control signal Cp changes by following the variation of the upstream side pressure P₁ of the mass flow controller 1, and hence the pressure Pc is kept constant in the second passage 2b installing the pressure sensor 7b. The control signal Cf changes by following the variation of the downstream side pressure P₂ of the mass flow controller 1, and hence the flow rate F flowing in the flow rate sensor 5 is kept constant.

Herein, comparing the actually flowing flow rate F and the set value Fs of flow rate, the actual flow rate F varies slightly at the moment of sudden changes in the pressures P₁, P₂, but the width of variation is very slight, and it returns to the set value Fs immediately in a very short time.

That is, by using the mass flow controller 1 of the invention, if sudden pressure fluctuations occur whether at the upstream side pressure P or at downstream side pressure P₂, a specified flow rate continues t o flow always by a very stable control.

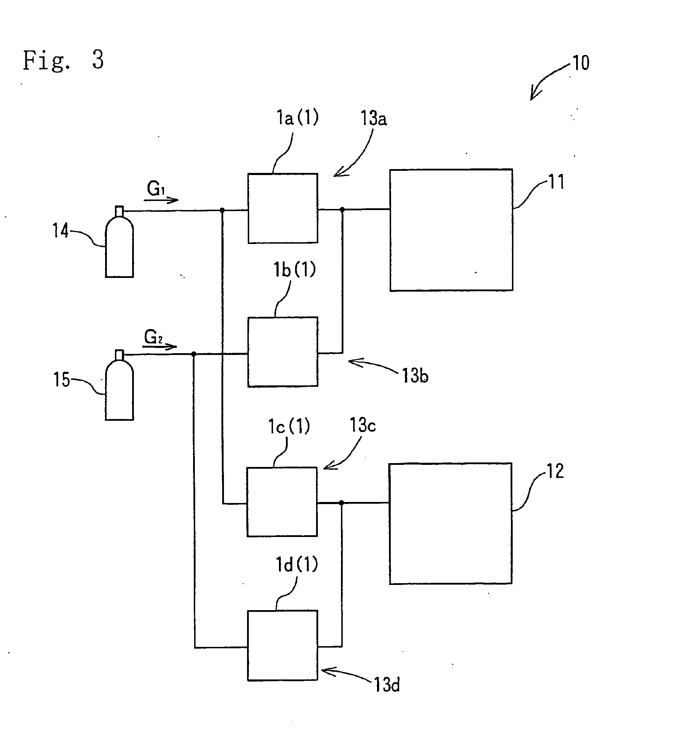

Fig. 3 shows an example of forming a semiconductor manufacturing line in the same configuration as in the prior art shown in Fig. 4 by using the same mass flow controller 1. In Fig. 3, the same reference numerals as in Fig. 4 represent the same parts and detailed description is omitted.

In Fig. 3, reference numerals 1a to 1d are mass flow controller 1 of the invention. That is, by using the mass flow controller 1 of the invention, the gas feed lines 13a to 13d can be composed in a very simple structure, and the time and labor for building the gas feed lines 13a to 13d can be saved. At the same time, only a small area is required for installing the gas feed lines 13a to 13d.

### INDUSTRIAL APPLICABILITY

Linking and coupling points of piping in gas feed lines 13a to 13d are very few, and the risk of gas leak or other troubles can be reduced.

As explained herein, according to the invention, the flow rate can be controlled at high precision and in a simple operation, without effects of pressure fluctuations at the upstream side and downstream side. Besides, since pressure regulators are not required in the stage before the mass flow controller, the cost performance can be enhanced substantially.

## Claims

1. A mass flow controller,comprising:
a passage block (3) having a fluid passage consisting of first, second and third passages (2a, 2b, 2c);
a flow rate sensor (5), a pressure control valve (4) and a flow rate control valve (6), whereby said pressure control valve is disposed at the upstream side of said flow rate control valve (6);
a pressure sensor (7b) disposed between the pressure control valve (4) and the flow rate control valve (6);
a controller (8) for feeding back a pressure signal (5pa) from the pressure sensor (7b) and issuing a pressure control signal (Cp) and for feeding back a flow rate signal (5f) from the flow rate sensor (5) and issuing a flow rate control signal (Cf),
whereby both said pressure control valve (4) and said flow rate control valve (6) comprise a diaphragm (4a, 6a) and an actuator (4b, 6b), said diaphragm (4a, 6a) abutting against said actuator (4b, 6b) and a valve seat (3c, 3d) which is formed at one side of the passage block (3),
whereby an opening degree for linking and coupling said first passage (2a) provided at the upstream side of the pressure control valve (4) to said second passage (2b) provided at the downstream side of the pressure control valve (4) is controlled by said pressure control signal (Cp), and
whereby an opening degree for linking and coupling said second passage (2b) provided at the upstream side of the flow rate control valve (6) to said third passage (2c) provided at the downstream side of the flow rate control valve (6) is controlled by said flow rate control signal (Cf).

2. The mass flow controller according to claim 1, wherein the pressure sensor is disposed at a position adjacent the flow rate sensor.

## Patentansprüche

1. Massenstrom-Steuereinrichtung, mit:
einem Durchlassblock (3) mit einem Fluiddurchlass, bestehend aus einem ersten, einem zweiten und einem dritten Durchlass (2a, 2b, 2c);
einem Durchflussmengensensor (5), einem Drucksteuerventil (4) und einem Durchflussmengen-Steuerventil (6), wobei das Drucksteuerventil auf der stromaufwärtigen Seite des Durchflussmengen-Steuerventils (6) angeordnet ist;
einem Drucksensor (7b), der zwischen dem Drucksteuerventil (4) und dem Durchflussmengen-Steuerventil (6) angeordnet ist;
einer Steuereinrichtung (8) zum Zurückführen eines Drucksignals (Spa) von dem Drucksensor (7b) und Ausgeben eines Drucksteuersignals (Cp) sowie zum Zurückführen eines Durchflussmengensignals (Sf) von dem Durchflussmengensensor (5) und Ausgeben eines Durchflussmengen-Steuersignals (Cf),
wobei sowohl das Drucksteuerventil (4) als auch das Durchflussmengen-Steuerventil (6) eine Membran (4a, 6a) und ein Stellglied (4b, 6b) beinhalten, und die Membran (4a, 6a) gegen das Stellglied (4b, 6b) und einen Ventilsitz (3c, 3d) anliegt, welcher auf einer Seite des Durchlassblocks (3) ausgebildet ist,
wobei ein Öffnungsgrad zum Verbinden und Koppeln des ersten Durchlasses (2a), der auf der stromaufwärtigen Seite des Drucksteuerventils (4) bereitgestellt ist, mit dem zweiten Durchlass (2b), der auf der stromabwärtigen Seite des Drucksteuerventils (4) bereitgestellt ist, durch das Drucksteuersignal (Cp) gesteuert wird, und
wobei ein Öffnungsgrad zum Verbinden und Koppeln des zweiten Durchlasses (2b), der auf der stromaufwärtigen Seite des Durchflussmengen-Steuerventils (6) bereitgestellt ist, mit dem dritten Durchlass (2c), der auf der stromabwärtigen Seite des Durchflussmengen-Steuerventils (6) bereitgestellt ist, durch das Durchflussmengen-Steuersignal (Cf) gesteuert wird.

2. Massenstrom-Steuereinrichtung nach Anspruch 1, bei der der Drucksensor an einer zu dem Durchflussmengensensor benachbarten Position angeordnet ist.

## Revendications

1. Régulateur de débit massique comprenant:
un bloc de passage (3) comportant un passage de fluide constitué de premier, deuxième et troisième passages (2a, 2b, 2c);
un détecteur de débit (5), une soupape régulatrice de pression (4) et une soupape régulatrice de débit (6), ladite soupape régulatrice de pression étant disposée du côté amont de ladite soupape régulatrice de débit (6);
un détecteur de pression (7b) disposé entre la soupape régulatrice de pression (4) et la soupape régulatrice de débit (6);
un organe de commande (8) destiné à réinjecter en entrée un signal de pression (5pa) provenant du détecteur de pression (7b) et à délivrer un signal de commande de pression (Cp), et à réinjecter en entrée un signal de débit (5f) provenant du détecteur de débit (5) et à délivrer un signal de commande de débit (Cf),
ladite soupape régulatrice de pression (4) et ladite soupape régulatrice de débit (6) comprenant toutes deux un diaphragme (4a, 6a) et un actionneur (4b, 6b), ledit diaphragme (4a, 6a) venant en appui contre ledit actionneur (4b, 6b), ainsi qu'un siège de soupape (3c, 3d) qui est formé d'un côté du bloc de passage (3);
un degré d'ouverture pour relier et accoupler ledit premier passage (2a) prévu du côté amont de la soupape régulatrice de pression (4) avec ledit deuxième passage (2b) prévu du côté aval de la soupape régulatrice de pression (4) étant commandé par ledit signal de commande de pression (Cp), et
un degré d'ouverture pour relier et accoupler ledit deuxième passage (2b) prévu du côté amont de la soupape régulatrice de débit (6) avec ledit troisième passage (2c) prévu du côté aval de la soupape régulatrice de débit (6) étant commandé par ledit signal de commande de débit (Cf).

2. Régulateur de débit massique selon la revendication 1, dans lequel le détecteur de pression est disposé au niveau d'une position adjacente au détecteur de débit.
